# EUROPEAN PATENT SPECIFICATION

(11) **EP 3 307 052 B1**
(45) Date of publication and mention of the grant of the patent: **17.04.2019**
(21) Application number: 16706509.3
(22) Date of filing: 02.03.2016
(51) Int. Cl.: A01D 51/00, A63B 47/02

(54) **OBJECT COLLECTOR DEVICE, OBJECT COLLECTOR CONTAINER, OBJECT COLLECTOR GRID PROTECTOR**
OBJEKTSAMMLERVORRICHTUNG, OBJEKTSAMMLERBEHÄLTER, OBJEKTSAMMLERGITTERSCHUTZ
DISPOSITIF DE RAMASSAGE D'OBJETS, RÉCIPIENT DE RAMASSAGE D'OBJETS, DISPOSITIF DE PROTECTION DE GRILLE DE RAMASSAGE D'OBJETS

(30) Priority: 11.06.2015 WO PCT/EP2015/063038
(43) Date of publication of application: 18.04.2018
(73) Proprietor: Husqvarna AB, 561 82 Huskvarna (SE)
(72) Inventor: MOCK, Axel, 89134 Blaustein (DE); SCHNEIDER, Regina, 89250 Senden (DE)
(74) Representative: Finkele, Rolf
(86) International application number: PCT/EP2016/054416
(87) International publication number: WO 2016/198173

(56) References cited:
- WO-A1-2013/064660
- US-A1- 2012 279 194
- US-B1- 6 460 249

## Description

The underlying invention is related to an object collector device, an object collector container, and an object collector grid protector.

Collecting objects, such as fruits like apples, pears, quinces, as well as nuts and the like, from the ground is comparatively cumbersome if done manually.

Therefore, efforts have been made to at least partially ease picking up fruits from the ground. Reference is exemplarily made to WO 2013/064660 A1 which shows a fruit collector having a collecting grid basket made from a plurality of elastic wires. By moving the container over a fruit lying on the ground, the wires, where the fruit touches the grid basket, are spread apart such that a penetration opening is generated enabling the fruit to enter the container through the grid basket.

Another example is provided by US 2012/279194 A1 which discloses a nut gatherer having a hollow drum formed by a plurality of wires. Each of the wires has a bowed middle segment and two end portions. The nut gatherer further has a pair of hubs configured to receive one of said end portions of each of said wires. A handle is rotatably mounted to said pair of hubs. When said drum rotates into contact with an object, the object forces said wires to separate and permit the object to move from outside said drum to inside said drum where it is trapped.

Known devices for collecting fruits indeed may ease picking up fruits, but still leave room for improvement, in particular with respect to construction, mechanical stability, and reliable operation.

An underlying problem may be to provide an object or fruit collector device, an object or fruit collector container, and an object or fruit collector grid protector that are able to ease construction and assembly, and further may be suitable for further improvements as regards mechanical stability and reliable operation and the collection of objects, such as fruits.

This object in particular is accomplished with the features and subject matter of the independent claim 1. Embodiments result from the dependent claims and the following description of embodiments.

In particular, the underlying invention is related to object or fruit collectors operable by rolling a rotatable collection container over an object or fruit to thereby passing the object or fruit into the collection container.

In accordance with an aspect or embodiment of the invention, an object collector grid protector, implemented for example as a type of protective structure and/or deflector, is provided. The objects referred to herein may for example be fruits, but also be any other type of objects such as tennis balls and similar.

Despite some embodiments described herein are directed or are described in connection with the collection of fruits, it shall be mentioned that the invention is not necessarily limited to fruit collection, but may be applied generally to any objects, in particular having similar shapes and/or configurations like fruits.

The collector grid protector, which will be referenced as grid protector in the below description, may be configured for use with a collector grid basket of an object collector device.

The collector grid basket may for example have a spheroidal shape, such as an uncut or cut ellipsoid or sphere.

The collector grid basket may comprise an object, in particular fruit, penetrable grid comprising a plurality of mutually spaced resilient grid bars, i.e. grid bars, for example wire bars, spring wires or spring bars. The grid bars may be made from metal and/or plastic and/or any other suitable material, in particular composite material.

The plurality of grid bars are supported by, for example fixed at or mounted to and/or integrally formed with, and extending off a basket base, implementing for example a base section of the grid basket. Extending off the basket base in particular shall mean that the grid bars at their end/s at respective root points, base sites, fulcrums, and/or base points are mechanically coupled to or formed integrally with the basket base. Extending off the basket base in particular shall mean that the grid bars extend off a mounting section fixing a predefined end section of the grid bar in place and/or extend off a region of origin defined by passing over from being fixed or fixedly clamped to the basket base to being able to undergo resilient deformation off the basket base. Extending off in particular shall relate to sections of the grid bars lying outside of fixtures provided for holding the grid bars in place according to a predefined grid pattern.

The basket base may for example comprise a pair of hubs, for example parallel and/or axially aligned hubs, hub discs, hub rings, hub plates, or any combination thereof. Longitudinal ends of the grid bars may be associated, for example mechanically coupled, clamped, or otherwise implemented, with a respective hub so that the grid bars extend between the hubs and span a collector volume, i.e. define a grid wall at least partially enclosing the collector volume.

The grid bars may be provided and attached in such a manner, that the collector grid basket is rotationally symmetric around an axis of rotation. For example, the grid bars may be provided and implemented such that the grid basket has the shape of a, for example single or double truncated, rotational ellipsoid. The grid bars may be aligned relative to each other such that the grid is in the form of a parallel grid having no overlapping or mutually crossing grid bars.

The grid basket and corresponding object collector container may in embodiments be designed for being rolled on the floor or ground to thereby pass the resilient grid over an object, e.g. fruit, to be collected.

By urging the resilient grid against the object, the grid bars locally at the area of contact are pushed apart and a penetration opening is generated through which the object may pass into the grid basket. Thereafter, the grid bars return by the action of resilient restoring forces to their original position so that the penetration opening disappears again, so that the object is accommodated within the collector grid basket.

According to the embodiment of claim 1, the collector grid protector comprises at least one annular protector shell, for example a, e.g. ring-shaped, section having a concave surface structure.

The protector shell has a predefined lateral width. The lateral width in particular shall mean the width, in particular surface width, relative to a direction transversal to a center axis of the protector shell or collector grid protector, which center axis may coincide with a center axis of the grid basket, for example. The width may also relate to the axial width parallel to the center axis.

The protector shell with its predefined width is configured to overlap with a predefined section, defining an overlapping region, of the grid basket, i.e. grid basket section, when the protector shell is properly applied, for example properly implemented and/or mounted and/or aligned with, the grid basket.

The overlap between the protector shell and overlapping region may be such that the protector may abut but does not firmly engage into the grid bars, in order to avoid blocking resilient deformation of the grid bars by firm engagement. For example, the protector may be designed such that it can touch and/or loosely abut the grid bars in the mounted state, e.g. from the outside and/or the inside as regards the inner volume of the grid basket.

The predefined section of the grid basket, i.e. grid basket section defining an overlapping region, is located adjacent, e.g. directly adjacent, to the basket base. The overlap is such that a passage of objects through the resilient grid into the grid basket in the overlapping region is disabled, at least for objects larger than a predefined size. For example objects exceeding a certain or predefined size may be blocked from entering the grid basket in the region of overlap. In regions outside the region of overlap, a passage of objects through the grid into the grid basket still may be enabled.

The protector shell may comprise a shell body having for example a stiff or rigid configuration as compared to resilience of the grid bars. The shell body may have, at least in part, a closed surface and/or pitted, perforated or slotted surface relative to its surface normal.

In embodiments in which holes or slots are provided in the shell body, they may have such a dimension and/or may have such a high rigidity and stiffness as compared to resilience of the grid bars, so as to block objects from entering the grid basket through the protector shell body in the overlapping region. Slots or holes provided in the shell body may have an elongated shape either in a circumferential direction or in an axial direction of the protector shell, and the shell body may for example have a grid-type structure or shape.
The shell body may for example represent or be implemented as a type of, for example as compared to resilience of the grid bars rigid, wall section or wall structure or curtain. In the mounted state, the shell body and grid therefore may implement a kind of double walled section thwarting, preventing or disabling a passage of objects, e.g. fruits, through the grid in the overlapping region.

The protector shell may not necessarily be considerably stiff or rigid as long as it is able to reject objects in the overlapping region from entering the collector basket. For example, in case that the protector shell overlays and covers the grid in the overlapping region just like a curtain, entrance of objects in the overlapping region may be prevented.

Disabling a passage of objects in the overlapping region, which is close or immediately adjacent to the basket base where the grid bars are supported, e.g. fixed, at their ends, prevents undue bending at root points, base sites, fulcrums, fixations and/or base points of the grid bars at the basket base, thereby largely preventing overstressing and overbending, in particular avoiding plastic deformation and damage of grid bars in the region near or at the basket base. Thus mechanical stability and reliability of operation may be obtained.

In embodiments, at least a section of the annular protector shell may have the shape of, i.e. may be shaped like a shell-surface or envelope surface of a cylinder layer, a spheroid layer, ellipsoid or sphere layer. A respective layer may be defined by cutting a cylinder, spheroid, or ellipsoid at two opposite sides by two parallel planes.

In embodiments, the annular protector shell may be designed in the form of a collar, extending, preferably in an integral design, from the base frame implemented for example as a sleeve or bushing.

The base frame, e.g. sleeve or bushing, may have a cylindrical shape, and the protector shell, e.g. collar, may project with respect to an axial center axis of the base frame radially outwards, preferably angled or inclined with respect to the radial direction relative to the center axis.

In embodiments, an angle of inclination between the radial direction with respect to the center axis of the base frame and a direction of extension of the protector shell may lie in the region of 30 degrees to 80 degrees.

Selecting a predefined angle of inclination between the collar and sleeve may contribute to defining or setting the shape of the grid basket when the collector grid protector is mounted or applied to the grid basket.

In embodiments, the annular protector shell may comprise at an outer radial end a circumferential web. The circumferential web in embodiments and variants may comprise a plurality of protrusions and/or incisions oriented radially, or in normal direction of the protector shell, outwards relative to a central axis of the annular protector shell. Oriented radially outwards, or in normal direction of the protector shell, in particular shall mean, that the protrusions and/or incisions are exposed to a side, defining in the ordinary mounted state when coupled to a grid basket, an outer side as regards the inner volume defined by the grid basket.

In the ordinary mounted state, the protrusions and/or incisions may in embodiments be provided at a side of the protector shell that is averted from the grid basket. Further, an inner side of the protector shell may be considered a side facing, in the ordinary mounted state, the grid basket and grid bars.

The protrusions and/or incisions, for example apexes of the protrusions or bottoms the incisions, may be mutually spaced from each other in circumferential direction, e.g. relative to a center axis. The protrusions and/or incisions may be evenly distributed over the circumference.

The plurality of protrusions and/or incisions in embodiments may be located at a radial outer end of the web and/or they may be aligned on the web along a circumferential line.

The protrusions and/or incisions may for example be provided in order to support rolling motion of an associated object collector container when it is rolled over the ground for collecting objects. The protrusions may enhance grip between the collection container and the ground where the collector container is rolled on. As such, the protector shell may have a function as, or be used as a type of wheel supporting rolling the collector container over the ground and/or limiting deformation of the grid when pressing the grid basket against the ground.

In embodiments, the protector shell may comprise a plurality of axial spokes extending from a base frame of the collector grid protector. The spokes may for example be implemented as axial bars, spaced from each other, with intermediate cut-outs or gaps. The protector shell may for example have a grid-like structure having sufficient rigidity and/or a mesh size suitable to disable the passage of objects, such as fruits, into the grid basket in the overlapping region.

The base frame of the collector grid protector may for example be implemented as or comprise a mounting section for mounting and/or coupling the collector grid protector to a grid basket and/or for being coupled, for example together with the grid basket, to a retaining bracket.

The collector grid protector may in embodiments for example be implemented as or comprise a support section for supporting ends of the grid bars to form or make up the grid basket. In other words, the grid bars may be supported directly by the base frame of the collector grid protector, or the collector grid protector as such.

In embodiments, the collector grid protector may comprise a hub section. The hub section may be a part of or comprised by the base frame, or may make up or define the base frame.

The hub section may be configured for being mechanically coupled to a counterpart hub section of a collector grid basket and/or a basket mounting bracket of a collector device. Here, the hub section may for example comprise a coupling interface, such as a bushing and/or a cylindrical outer or inner sliding surface adapted to be coupled to a respective counterpart interface, for example a hub axle and/or an inner or outer sliding surface, or similar.

The hub section in embodiments may be configured for mechanically connecting thereto and/or supporting the plurality of resilient grid bars of the grid basket. Supporting the grid bars may comprise a mechanical mounting connection between a grid bar and the hub section and/or it may comprise an integrated design of hub section and grid bar. A single hub section may, for example, be divided in several mutually connectable hub subsections.

In embodiments, the hub section may at least in part have the shape of or be shaped in accordance with a shell-surface of a cylinder layer. For example, the hub section may have a cylindrical shape, a cup-shape, a bushing-type shape and the like. The collector grid protector may have a versatile functionality. For example, it may act as a shield preventing objects passing through the grid near the basket base, and/or it may act as a support for the grid bars, e.g. the grid bars spanning the grid basket, and/or it may act as a mount or bearing for establishing a, e.g. pivotable, coupling with a mounting unit, for example implemented as a fork-shaped bracket, of a collector, and/or it may act as a wheel supporting operation and limiting deformation during operation.

As can be seen, the proposed design and structure for example allow comparatively easy assembly and handling.

In accordance with claim 5, an object collector container, e.g. a collecting container for collecting objects such as fruits, is provided.

The collector container may comprise a collector grid basket having an object penetrable grid with a plurality of mutually spaced resilient grid bars. The grid bars in view of their lengthwise orientation may for example be oriented in accordance with a common central axis, e.g. symmetry axis. As an example, the grid bars may be provided and arranged to define a rotationally symmetric body, e.g. a rotationally symmetric ellipsoid, barrel, and/or drum.

The grid bars, for example implemented as wire bars or spring wire bars, may be supported by and extending off a basket base. The basket base may for example be implemented as a hub and/or as a shell body of the protector shell.

The collector container may further comprise at least one collector grid protector according to at least one embodiment as described herein.

The collector grid protector may be associated with or positioned and arranged such that the collector grid protector, in particular the protector shell, overlaps, for example overlays, the grid, e.g. a section of the grid basket, a predefined lateral width in a predefined section of the grid basket.

The predefined section of overlap, i.e. the overlapping region or section, may be located adjacent to, e.g. immediately adjacent to, the basket base. Further, the collector grid protector and protector shell are arranged and implemented such that a passage of objects, e.g. fruits and similar, through the grid basket is disabled in the overlapping region or section.

Advantages of the collector container in particular result from the advantages and advantageous effects of the collector grid protector, which shall apply *mutatis mutandis.*

In embodiments, the grid may have a spheroidal shape or configuration, for example may define a spheroidal, barrel-shaped, and/or drum-shaped collection chamber or collection chamber volume.

The resilient grid bars may in embodiments be oriented in axial direction of the collector container. Optionally, at each axial end of the collector container, one of the at least one collector grid protector may be provided.

In embodiments, a maximal radial diameter of the grid, more exactly a maximal radial diameter of the collector volume spanned by the grid, may be larger than a maximal radial diameter of a circumference defined at an outer rim of the protector shell. The difference in size may amount to a factor between 1/5 and 1/3. For example, the maximal radial diameter of the grid may be larger by a factor of 1/5 to 1/3, in particular 1/4, than a maximal radial diameter the protector shell or the circumference defined at an outer rim of the protector shell.

The difference in diameter may be such that in case of pressing the collector container against the ground until the protector shells get in contact with the ground, the grid bars are not unduly deformed, thereby preventing overbending and plastic deformation.

In particular in such embodiments, the collector grid protector, e.g. a circumferential web, may be used as a wheel supporting rolling movement of the collector container when rolling the collector container over the ground for the purpose of collecting objects.

In embodiments, the protector shell may at least in a section of the overlapping region abut against or fit closely to the resilient grid bars, e.g. the grid basket defined by the resilient grid bars.

The protector shell may in embodiments be designed such that it is located on an outer and/or inner side of the volume of the collector container. In embodiments, the protector shell may be a double-walled type protector shell, meaning that a protector shell segment is provided both on an inner and outer side of the grid basket.

The protector shell on a side facing the grid bars of the grid basket may be associated with the grid such that the grid bars can perform, in the overlapping region, movements relative to the protector shell. Respective movements in particular comprise movements induced by resilient deformation of the grid bars, for example in case of collecting an object through the grid outside the overlapping region.

In embodiments, the collector grid protector, at least a section thereof, may be implemented and arranged to act as a wheel rolling on the floor in operational modes where objects, such as fruits, are picked up by rolling the collection container over the object. In particular in such configurations, projections and/or incisions provided on the collector grid protector may operate to enhance grip between the collector container and the ground or surface the collector container is moved along.

In embodiments, in which the collector grid protector is implemented to act also as a wheel, it may be provided that the collector grid protector comprises a ring-shaped, i.e. annular, flange-section, or wheel-section, protruding away from the collector grid basket in outward direction and acting as the wheel, or as a type of wheel or annular or circular support for rolling on the ground when picking up fruits in a rolling motion of the collector basket.

The annular flange-section may be formed integral with the protector shell, in particular meaning that the flange-section and the protector shell may be merged with each other, or in other words, that these parts of the collector grid protector may be made as a one-piece part.

In embodiments, the annular flange-section or wheel-section may be implemented to extend from an axially inner rim, e.g. a radially outer circumferential rim, of the protector shell. For example, the protector shell may cover a section of the basket or grid located at the axial end of the basket, and the annular flange section may extend from the border or rim of the protector shell facing away from the axial end of the basket or grid.

The annular flange-section may extend from the protector shell such that the distance between the side of the flange-section facing the basket and the basket gradually increases. In particular, the flange-section may at least partially be curved, wherein the flange-section may be implemented to gradually curve away from the basket, so as to project, preferably by a predetermined amount or distance, over the outer shell surface of the basket. In particular, the flange-section may be vaulted in axial direction of the basket.

In embodiments, in which an annular flange-section or wheel section for rolling over the ground is provided, for example as previously described, it may be provided that the annular flange-section or wheel-section comprises at its radial outer edge a tread section for rolling on the ground. The tread section may be implemented as a bead or bulge or similar, or indeed as or like a wheel tread, for example. The tread section may in embodiments comprise a tread profile, which for example may be provided to insure better ground grip.

In embodiments, in which an annular flange-section or wheel section for rolling over the ground is provided, for example as previously described, the diameter of the annular flange-section or wheel-section acting as a type of wheel, may be adapted to essentially correspond to the maximal outer diameter of the grid, *i.e*. of the basket. The term essentially correspond in particular shall mean that the diameter of the annular flange-section may be the same as the maximal diameter of the basket with respect the shape of the basket in the particular operational configuration, or that the diameter of the annular flange-section may be smaller or larger to a certain extent than the maximal diameter of the basket such that it is possible to avoid excessive bending of the basket, in particular of the grid bars of the basket, in operational conditions when the basket or the collector is urged to the ground.

In particular, the annular flange-section to some extent may acts as a spacer keeping the rotary axis of the basket at a predefined distance from ground during operation, meaning that the basket, under ordinary operation, is prevented from being inappropriately pressed or urged against the ground, thereby preventing that the grid bars of the basket are overbent and/or become plastically deformed or even damaged.

As can be seen, by providing the annular flange-section or wheel-section, undue bending of the basket and the grid bars of the basket can be avoided, whilst allowing the grid to be sufficiently flexible for picking up objects such as fruits.

In embodiments, the collector grid protector may be exchangeably coupled to the basket base. Here, the collector grid protector in particular may be implemented as a retrofit part and/or spare part, for example allowing easy handling and mounting of the collector grid protector.

In embodiments, the collector grid protector may at least in part be formed integrally with the basket base. This means, that the collector grid protector need not be a separate component part, but may be of integral design, in particular easing manufacture and assembly.

In embodiments, the collector grid protector may comprise a hub section mechanically coupled to and/or integrally formed with the protector shell. The hub or hub section may be implemented as described further above.

The hub section may be mechanically coupled to a counterpart hub section of the basket base and/or implemented as and/or providing a hub for rotatably mounting and coupling the collector container to a hub mount or hub support of a retaining bracket. Reference is additionally made to the discussion further above, where already details related to a hub implementation of the protector shell, or at least a part thereof has been discussed.

In embodiments, first ends of the plurality of resilient grid bars may be associated with, for example attached to or integrally formed with, a first collector grid protector, and averted second ends of the plurality of grid bars may be associated with a second collector grid protector. For example, at each axial end of the collector container there may be provided a collector grid protector.

In embodiments, the first ends and second ends of the grid bars may be attached, for example detachably attached, to the first and second collector grid protector.

In embodiments, the resilient grid bars may be formed integrally, i.e. mounted in one piece, with the collector grid protector. Such an integral design in particular may ease mounting and assembly.

Embodiments related to an integral design as referred to herein for example may be implemented such that corresponding components at least in part are moulded in one piece. Moulding may be based on plastic materials and/or metallic materials.

In accordance with claim 15, an object collector device is provided. The object collector device may comprise at least one collector container according to at least one of the embodiments described herein, or it may comprise at least one collector grid protector according to at least one embodiment described herein. For advantages and advantageous effects of the object collector device, reference is made to the above discussion, which shall apply *mutatis mutandis.*

The collector device may in embodiments comprise a retaining bracket or similar support structure for mounting and supporting the collection container. Further, a handle adapted to user operation may be provided, which handle may be coupled with the support or retaining bracket to allow adequate handling of the collector container, for example, rolling the collector container over the ground and over objects to be collected to thereby pass the objects through the grid into the collector container.

It shall be mentioned, that the term object is understood widely. It may for example relate to fruits like apples, pears or similar, or nuts, such as walnuts, and the like, but also other objects of similar shape and geometry.

The collector grid protector as such, in particular respective base frames, or other subsections, may function as a support for the grid bars. Other embodiments, however, may provide that the collector grid protector is implemented as a supplemental element, that may be associated, e.g. coupled, with the collector container according to respective needs.

Exemplary embodiments will now be described in connection with the annexed figures, in which
- FIG. 1: shows a front view of an object collector container assembly;
- FIG. 2: shows a side perspective view of a collector container assembly;
- FIG. 3: shows cross sectional view of a collector container assembly;
- FIG. 4: shows a detail of a collector container;
- FIG. 5: shows a front view of a collector container;
- FIG. 6: shows a perspective view of a further embodiment of a collector container assembly;
- FIG. 7: shows a back view of the collector container assembly of FIG. 6;
- FIG. 8: shows a front view of the collector container assembly of FIG. 6; and
- FIG. 9: shows a side view of the collector container assembly of FIG. 6.

In the embodiments shown in the figures, elements similar or identic in function are designated with like reference signs. The embodiment in the figures may relate to a preferred embodiment, while all elements and features described in connection with the preferred embodiment may be used in combination with any other embodiment and feature as discussed herein, in particular related to any other embodiment discussed further above.

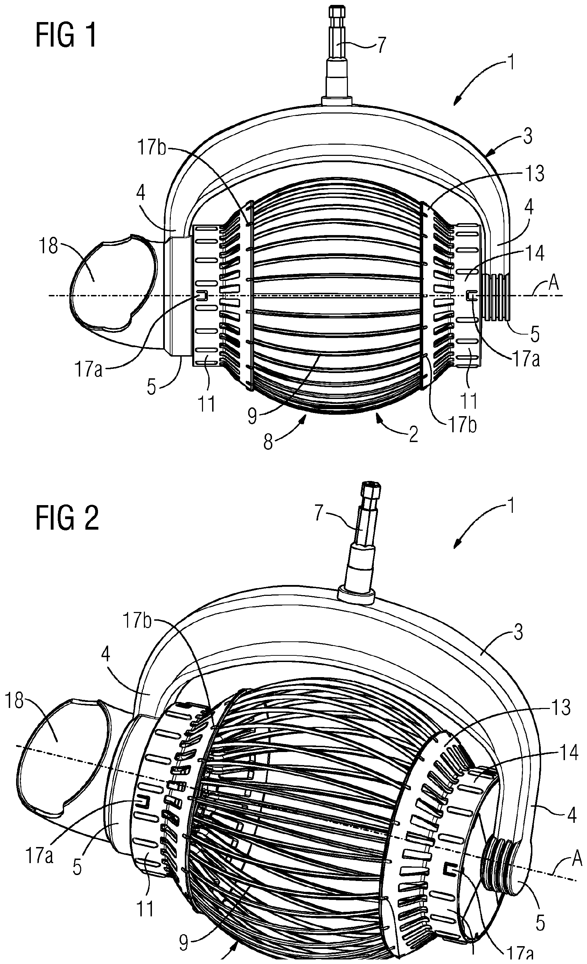

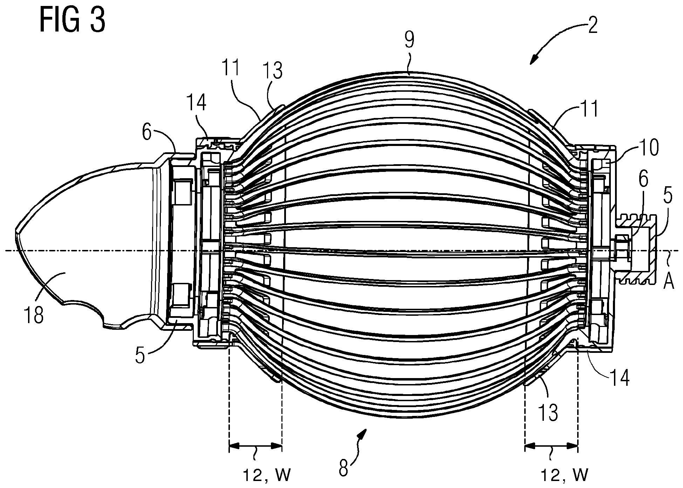

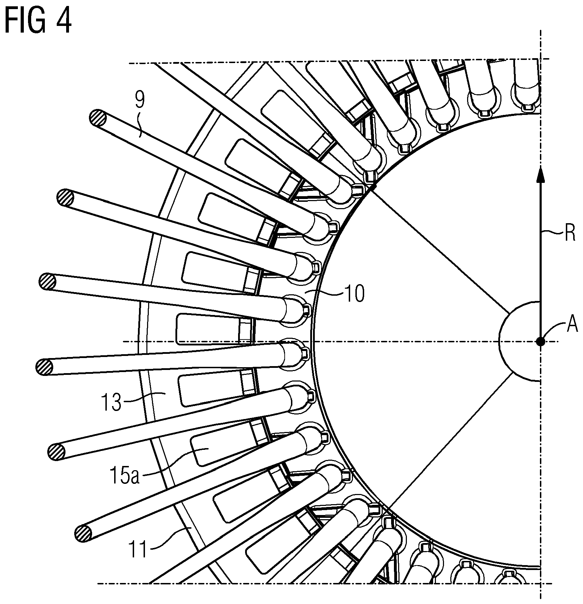

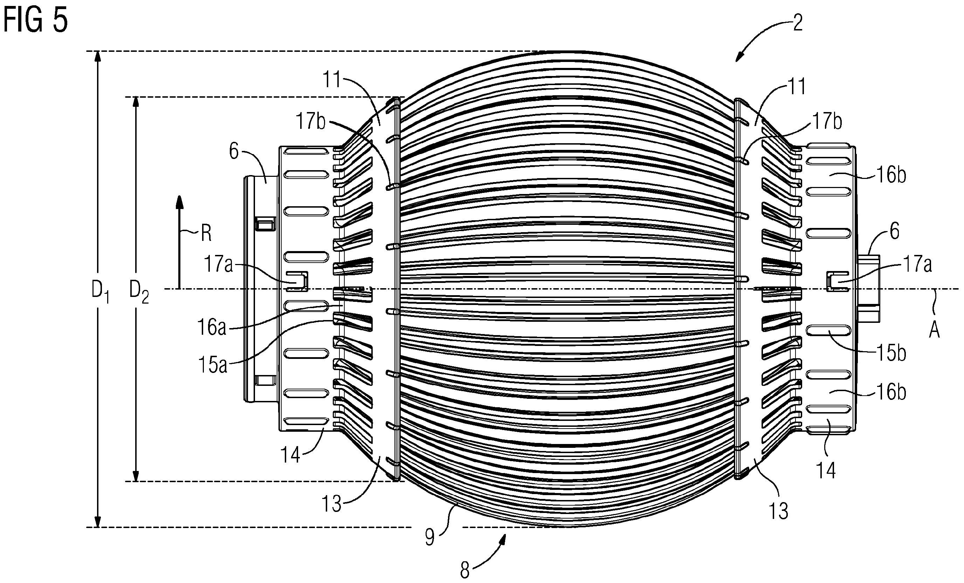

FIG. 1 shows a front view of an object collector container assembly 1 according to an embodiment of the invention. FIG. 2 shows an embodiment of a collector container assembly 1 in a side perspective view. FIG. 3 shows an embodiment of a collector container assembly 1 in a cross sectional view. FIG 4 shows a detail of an embodiment of a collector container 2. Finally, FIG. 5 shows an embodiment of a collector container 2 of a collector container assembly 1.

The collector container assembly 1 and collector container 2 may be designed for the collection of fruits from the ground. However, it may also be designed for the collection of other objects, in particular of similar size and/or shape.

The collector container assembly 1 as shown in the figures comprises a collector container 2 attached to a mounting or handling bracket 3.

The mounting bracket 3 is of a fork-shaped configuration and comprises a couple of fork arms 4 extending from a common base. Each of the fork arms 4 may comprise at its distal end a first hub 5 configured to accommodate and be rotatably coupled with a second hub 6 implemented at the collector container 2.

The mounting bracket 3 may in embodiments as shown in FIG. 1 and FIG. 2 comprise a coupling section 7 configured for coupling the mounting bracket 3, in particular the collector container assembly 1 to a handle (not shown).

As can in particular be seen from FIG. 3, the collection container 2 may comprise a grid basket 8, composed, as shown in the exemplary embodiment in the figures, of a grid implemented, for example as a parallel grid, by a plurality of grid bars 9.

The grid bars 9 are implemented as resilient wire grid bars, made of plastic or metal, and are supported, for example attached, clamped and/or designed integrally, at averted ends respectively at one of the basket bases 10 (cf. FIG. 3, 4).

The grid bars 9 and basket base 10 in embodiments may be configured and adapted such that they make up and define a spheroid shaped collector volume. In other words, the collector container 2 according to embodiments may be implemented in spheroid, in particular ellipsoid, structure truncated at both axial ends, and/or as a convex shaped barrel or drum, as shown in the figures.

The grid bars 9, as already mentioned, are implemented as resilient and bendable elements, having sufficient flexibility to allow elastic deformation for example in circumferential direction relative to a central axis A or rotational or symmetry axis of the collector container 2.

The grid bars 9 are designed and resilient to such an extent, that it is possible to collect fruits or objects from the ground in a rolling over motion, as has been described in more detail further above.

The collector container 2 in embodiments may comprise a collector grid protector 11. The collector grid protector 11, or in short grid protector 11, in the present embodiment is applied to the grid basket 8, and grid bars 9 thereof. More specifically, a grid protector 11 is applied to each axial end of the grid basket 8.

The grid protector 11 comprises an annular protector shell 13, designed for example as a type of collar, extending from a base frame 14 which may be designed as a sleeve or bushing.

The protector shell 13 is inclined, with regard to the radial direction R, by a predefined angle and projects from the base frame 14 radially outwards.

The annular protector shell 13 may be in the shape of a shell-surface of a spheroid layer, wherein the base frame 14 may be in the shape of a shell-surface of a cylinder layer.

Regarding the terms spheroid layer and cylinder layer, it shall be mentioned that respective geometric bodies can be obtained by cutting for example a spheroid or cylinder by two parallel planes, and taking the cut out section between the two planes as the geometric body.

The base frame 14 and protector shell 13 may, as in the embodiment shown in the figures, be implemented as a one piece part, e.g. moulded, for example from plastic, as a one-piece part. However, the grid protector 11, including the base frame 14 and protector shell 13 may also be made in full, or at least in sections from metal.

The protector shell 13 and base frame 14 may, as is shown in the figures, in embodiments comprise in circumferential direction a plurality of cut-outs 15a and 15b and corresponding axial spokes 16a and 16b (cf. FIG. 5).

The cut-outs 15a and spokes 16a at the protector shell 13 may in embodiments be designed in accordance with the pattern of the grid in an overlapping region 12.

As can for example be seen from FIG. 4, the cut-outs 15a and spokes 16a may be arranged and/or designed such that the spokes 16a are aligned with the grid bars 9, and that the cut-outs 15a are aligned with the gaps between the grid bars 9. Such a configuration may contribute to lightweight design and at the same time provide sufficient stability and support for the grid bars 9.

The cut-outs 15b of the base frame 14 may contribute to lightweight design and/or contribute and/or be designed to contribute to improved attachment of the base frame 14, or grid protector 11, to the grid basket 8, more specifically basket base 10.

For example, the cut-outs 15b, but also corresponding spokes 16b may in embodiments be implemented to engage or mesh with a corresponding fixing structure of projections and/or depressions at the grid basket 8, specifically basket base 10.

The fixing structure and corresponding engagement with the cut-outs 15 and/or spokes 16 in corresponding embodiments may be such that displacement of the grid protector 11 relative to the grid basket 8, specifically relative to the grid base 11, in axial direction and/or in circumferential direction can be prevented as regards ordinary operational conditions.

With regard to attachment of the grid protector 11 to the grid basket 8, specifically basket base 10, there may, in embodiments, be provided additional and corresponding snap elements 17a (see for example FIG. 1, 2, 5). The snap elements 17a may for example be implemented to prevent axial and/or circumferential displacement of the grid protector 11 relative to the basket base 10.

Further with regard to attachment of the grid protector 11 it shall be mentioned that the embodiments as shown in the figures propose to implement the grid protector as a separate component part of the collector container 2. However, the underlying invention is not restricted to such a design, and can also be applied to grid protectors that are at least in part implemented in an integral design with the basket base 14, for example are, at least on part, formed with the basket base 14 in a one-piece configuration.

As can be seen in the figures, the protector shell 13 in its axial extension has a predefined width defining an axial width W (cf. FIG. 3) of the overlapping region 12.

The grid protector 11, and in particular the protector shell 13, are arranged, and in the embodiments shown in the figures mechanically coupled with the basket base 10, such that the protector shell 13 overlaps the grid of the grid basket 8 in the overlapping region 12 over the predefined axial width W (cf. FIG. 3). The overlapping region 12 is located adjacent, preferably directly adjacent, to the basket base 10 where the grid bars 9 are supported.

The way of attachment of the grid protector 11 to the basket base 10 and grid basket 8, and by the design of the grid protector 11, a passage of objects, such as fruits, in the overlapping region 12 through the grid can be prevented.

The grid protector 11, and in particular the protector shell 13 may be implemented as a rigid body, as compared to the resilient grid bars 9, keeping and preventing, in the overlapping region, objects, such as fruits, from urging against the grid and/or from generating, by locally bending apart grid bars 9, penetration openings.

The grid protector 11, at least the protector shell 13, may be made from a stiff plastic material or be made from metal having sufficient rigidity and stability to repel objects in the overlapping region 12 to thereby preventing the passage of objects through the grid in the overlapping region 12. However, as discussed further above, non-rigid implementations may also be considered.

As mentioned above, the grid protector 11 may in embodiments have a grid type structure designed to prevent the passage of objects. In other embodiments, the grid protector 11, at least however the protector shell 13, may be implemented to have, a continuous or full-faced, i.e. non-grid type, surface.

In embodiments, at least the protector shell 13, for example implemented in a full-faced design, may for example be made from an optically transparent material, enabling a user to inspect the grid basket interior through the protector shell 13.

In embodiments, as also shown in FIG. 1, 2, and 5, the protector shell 13 may comprise at an outer radial end a plurality of protrusions 17b, for example burls or naps, or of burl or nap type design. It is noted, that embodiments may also or in the alternative provide incisions.

The protrusions 17b are oriented radially outwards relative to the central axis A of the protector shell 13, and are mutually spaced from each other in circumferential direction. The protrusions in the embodiments shown in the figures are evenly distributed along the circumference of the protector shell 13.

The plurality of protrusions 17b may act to improve grip in operational modes where the collector container 2 is moved over the ground in a rolling action. In view of this, it shall be mentioned, that the grid protector 11, in particular the protector shell 13, may be used or act as a wheel suitable to roll on the ground when collecting objects by rolling the collector container 2 over the objects.

In accordance with FIG. 1, 2, 3, and 5, it can be seen, that the grid protector 11, more specifically base frame 14, in embodiments may comprise a hub section. The hub section in the present case coincides with the base frame 14, and is therefore designated with the same reference sign.

The hub section 14 in the present embodiment is configured for being mechanically coupled to a counterpart hub section of the grid basket 8. More specifically, the grid basket 8, in particular the basket base 10, may comprise a circumferential, for example cylindrical, outer surface configured to be coupled with a corresponding inner surface of the hub section 14.

The hub section 14 and basket base 10, in particular the surfaces as addressed previously, may, but need not, comprise or be implemented with an interlocking providing a twist-lock between the grid protector 11 and basket base 10. Such a twist lock may for example be implemented in connection with cut-outs 15 and spokes 16 described further above.

In embodiments, the grid protector 11, for example the base frame or hub 14 may be implemented to comprise and/or represent the second hub 6 as mentioned further above. However, embodiments may provide the second hub 6 at the basket base 10, as is for example shown in FIG. 3.

As is indicated in FIG. 5, but as can also be seen from FIG. 1, 2, and 4, a maximal radial first diameter D1 of the grid basket 8 is larger, for example by a factor between 1/5 to 1/3, than a maximal radial second diameter D2 of the grid protector 11.

By adequately setting the difference between the first diameter D1 and second diameter D2, resilient deformation when pressing the collector container 2 an grid basket 8 against the ground during manual operation is possible, but restricted in accordance with the difference in the first D1 and second diameter D2. In particular by adequately adjusting the first D1 and second diameter D2, overstretching and plastic deformation of the grid bars 9 can be prevented.

In embodiments as shown in the figures, the protector shell 13 at least in sections of the overlapping region 12 may, in the idle condition, abut against or fit closely to the grid bars 9. In particular for the reason that the grid protector 11 may be made from a comparative rigid material in view of resilience of the grid bars 9, mechanical stability, shape, geometry, and/or dimensional stability of the grid basket 8, in axial direction and/or in radial direction can be enhanced.

The grid protector 11 and protector shell 13 may in embodiments as shown in the figures be provided on an outer side of the grid basket 8. However, in embodiments it is possible that, in the alternative or additionally, there is provided at least a section of a protector shell 13 and/or base frame 14 on an inner side of for example the grid basket 8.

The grid protector 11 and/or the protector shell 13 are/is implemented, positioned and attached to the grid basket 8, such that the protector shell 13 in fact overlaps the grid in the overlapping region 12, but does not interfere or mechanically engage with the grid bars 9. This in particular may mean that the grid bars 9, for example in circumferential direction, can be moved and bend relative to the protector shell 13 as if the annular protector shell 13 and grid protector 11 were not present.

As has been already explained herein, the collector container 2 may be operated to collect objects, such as fruits, from the ground by rolling the grid basket 8 with the section lying off or between the overlapping regions 12 over the object to be collected. The object, upon being urged against the grid, presses apart the grid bars 9 in the area of contact to thereby enlarge the gap between adjacent grid bars 9 until a penetration opening is generated that is sufficiently large for the object to pass through and into the collection container 2. After having passed through, the grid bars 9 return to their ordinary positions and arrangement in circumferential direction of the collector container 2 thereby enclosing the object.

Due to the presence of the protector shell 13 in the overlapping region 12 adjacent to sections where the grid bars 9 are supported by or mounted to, and pass off the basket base 10, a passage of objects through the grid in the overlapping region is prevented. In case that the protector shell 13 has a grid-type structure, a passage of objects exceeding a predefined size may be prevented, which can be inferred for example from FIG. 4.

As can be seen, the grid protector 11 and protector shell 12 are suitable and effective in avoiding undue bending or even overbending of one or more grid bars 9 as a cause of forcing through an object between adjacent grid bars 9. For example it can be prevented by the protector shell that an object which is substantially larger than a distance between adjacent grid bars 9 near the basket base 10 is urged through the grid, accompanied with comparatively large deflections of the grid bars 9 at least in circumferential direction. Or in other words, forcing through an object or fruit through the grid in the region near the basket base 10, or at least trying to do so, can cause overbending and even plastic deformation of the grid bars 9 in case that the object is too large.

By providing the grid protector, penetration of objects or fruits in the region near the basket base 10 can be prevented, and thus overbending and plastic deformation, as well as corresponding improper operation can be prevented.

Further, the grid protector 11 and protector shell 13 may act as a type of wheel and may define a minimal distance between the central axis A and the ground. Thereby, the possible stroke when pressing the grid basket 8 to the ground is limited, and overbending and plastic deformations as a cause of an operator unduly pressing the grid basket 8 against the ground may be prevented.

Further, by providing the grid protector 11 and protector shell 13, stability and rigidity of the grid basket 8 in axial and/or radial direction can be improved, and/or the shape of the grid basket 8 in idle configuration may be fixed. By this, operation and handling of the collector assembly 1 may be improved.

As supplementary remarks, it is noted, that the collector container assembly 1 as shown in the figures comprises an axial spout 18 that is implemented at one of the arms of the mounting bracket 3. The spout 18 is configured to allow the passage of objects into and out of the collection container 2. In particular, objects, such as fruits, may be collected via the spout 18, and/or the collection container 2 may be emptied via the spout 18 by adequately tilting up the collector container assembly 1 such that objects within the collector container can escape, for example by the action of gravity.

As can be inferred from FIG. 1 and FIG. 5 showing the collector container 2 without the mounting bracket 3, the collector container 2, specifically one of the basket bases 10 (the left-hand one in FIG. 5) comprises a through-hole corresponding to the opening defined by the spout 18, such that in the mounted state a passage way through the spout 18 and through-hole for the passage of objects is established.

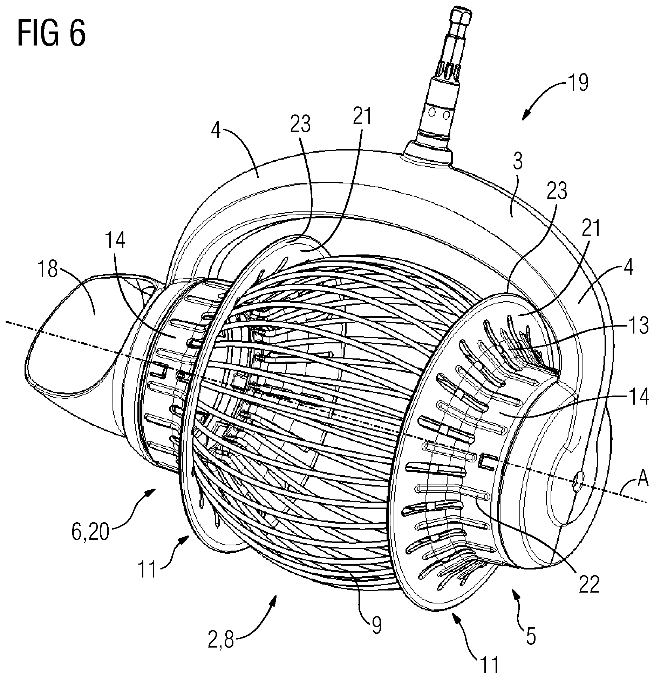

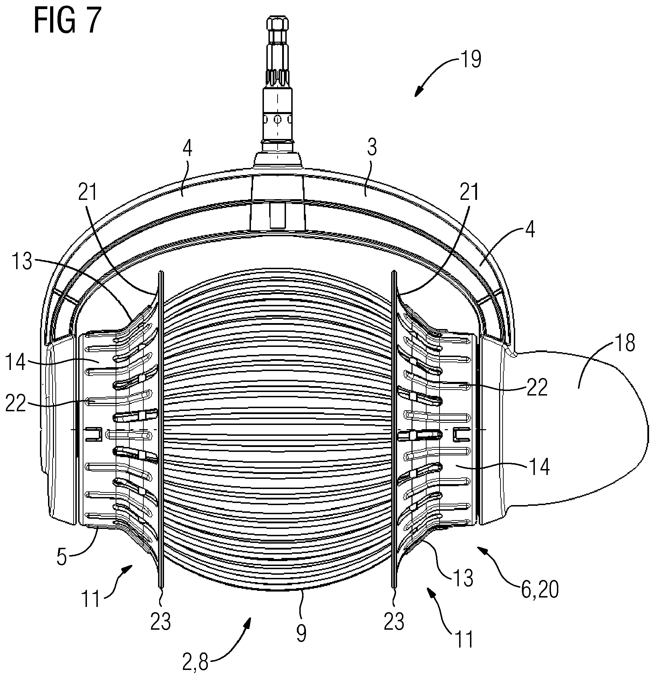

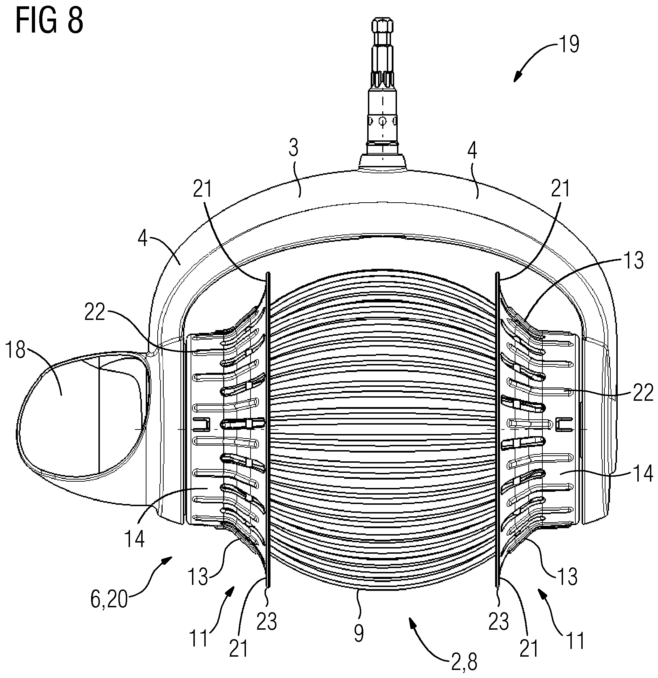

FIG. 6 to FIG. 9 show different views of an embodiment of a further collector container assembly 19. The further collector container assembly 19 comprises a collector container 2 implemented as a type of grid basket 8 comprising a plurality grid bars 9. The grid bars 9 are attached at or fixed to corresponding hub sections 5 and 6, comprising for example one or more retaining rings 20 to which the grid bars 9 are fastened to.

The hub sections 5 and 6 or the retaining rings 20, respectively, are provided at both axial sides of the grid basket 8, wherein the term "axial" shall relate to the central axis A of the grid basket, acting in the present case also as an axis of rotation of the collector container 2 or grid basket 8.

Similar as the collector container assembly as shown in FIG. 1 to FIG. 5, the further collector container assembly 19 shown in FIG. 6 to FIG. 9 comprises a mounting bracket 3 with two fork arms 4 having the first 5 and second hub 6 at their distal ends. The hubs 5, 6 are coupled with corresponding shaft sections of the grid basket 8, wherein the shafts may be implemented by the retaining rings 20 provided for retaining the ends of the grid bars 9.

The collector container 2 comprising the grid basket 8 having the elastic grid bars 9 extending in axial direction between the retaining rings 20, for example, is clamped between the fork arms 4 such that the grid basket 8 has a slightly bulged, spheroid shape.

By elastic forces generated by the grid bars 9 in a direction parallel to the central axis A, the grid basket 8 at its lateral, axial ends, is/are urged towards and into contact with the hubs 5 and 6, thereby assuring sufficient retention force to keep the grip basket 8 attached to the mounting bracket 3 during operation. However, it is noted, that the grid basket 8 may be fixed to the mounting bracket 3 in other ways, and that the shape of the grid basket 8, *i.e*. the spheroid shape, of the grid basket 8 may be obtained other than just urging the grid basket 8 into the space between the fork arms 4.

The further collector container assembly 19 comprises, similar to the collector container assembly 1 shown in connection with FIG. 1 to FIG. 5, also a lateral spout 18 provided or implemented with one of the hubs 5 and 6, wherein the spout 18 in the present case has the same function as previously described, but has a somewhat different shape.

As regards the function and attachment of the elements described so far, reference is made to the description of the collection container assembly 1 shown in FIG. 1 to FIG. 5, applying *mutatis mutandis* for the further collection container assembly 19. However, one difference between the two collector container assembly embodiments 1 and 19 is, that the collector grid protector 11 of the further collector container assembly 19 as shown and described in connection with FIG. 6 to FIG. 9, at least a section thereof, is implemented and arranged to act as a wheel rolling on the ground in operational modes where objects are picked up by rolling the collector container 2 over the object lying on the ground.

More specifically, the collector grid protector 11, having the base frame or hub section 14 and the protector shell 13 further comprises, in the embodiment of the further collection container assembly 19, a ring-shaped or annular wheel- or flange-section 21 that extends from an axially inner section or edge of the protector shell 13.

The annular wheel- or flange-section protrudes away from the grid basket 8 in outward direction and acts as a kind of wheel that can be rolled over the ground or floor to thereby move the collector container 2 over the ground or floor in a rolling action.

In the present case, the annular wheel- or flange-section 21 is formed integral with the protector shell 13, wherein the protector shell 13 merges into the annular flange-section 21 at an axial inner edge or rim of the protector shell 13.

The grid protector 11 of the further collector container assembly 19 may be implemented as a one-piece part, comprising as a single piece the base frame or hub 14, the protector shell 13, and the wheel- or annular flange-section 21. The grid protector 11 may be made in integral form from a plastic material.

The annular flange-section 21 may be shaped, as for example shown in FIG. 6 to FIG. 9, in accordance with or similar to a section of a toroid. For example, the annular flange-section 21 may have a shape resembling a section of the surface of a toroid.

In particular with such toroidal shapes, but also with other shapes, the annular flange-section 21 may be implemented to gradually tilt away from the bearing face or surface as defined by the protector shell 13 for supporting the grid basket 8. Such a gradual tilt may be advantageous as regards stability of the grid protector 11 as such, whilst allowing satisfactory bending movement of the grid bars 9.

In order to enhance stability of the grid protector 11, in particular in the region of the protector shell 13 and/or the annular flange-section 21, the grid protector 11 may comprise one or more, or a plurality of stiffening and/or reinforcement elements 22, *e.g*. stiffening rips or reinforcement ribs. These stiffening and/or reinforcement elements may be oriented, when viewed in a plan view perspective, essentially in parallel to the central axis A, *i.e*. they may be oriented essentially in line with the axial direction of the grid basket 8 that is or is to be secured to the grid protector 11.

The wheel- or annular flange-section 21 may comprise, as for example shown in FIG. 6 to FIG. 9, at its radial outer edge a tread section 23. The tread section 23 may be implemented, for example, as a bead or bulge, as shown in FIG. 6 to FIG. 9, or may have another shape, such as for example a planar or bulged broadened running surface, *e.g*. similar to that of a tyre.

The tread section 23 may be provided and adapted for rolling on the ground, *i.e*. for contacting the ground during operation of the collector container assembly 1 when it is moved in a rolling motion over the object to be collected.

The tread section 23 may comprise a comparatively flat outer surface structure. In other embodiments, the outer surface structure of the tread section 23 ,may be profiled, *i.e*. comprise a tread profile, which may be effective in improving sufficient ground grip so as to obtain a rolling or rotating motion of the grid basket 8 when pushing the annular flange-section 21, more specifically the tread section 23, over the ground.

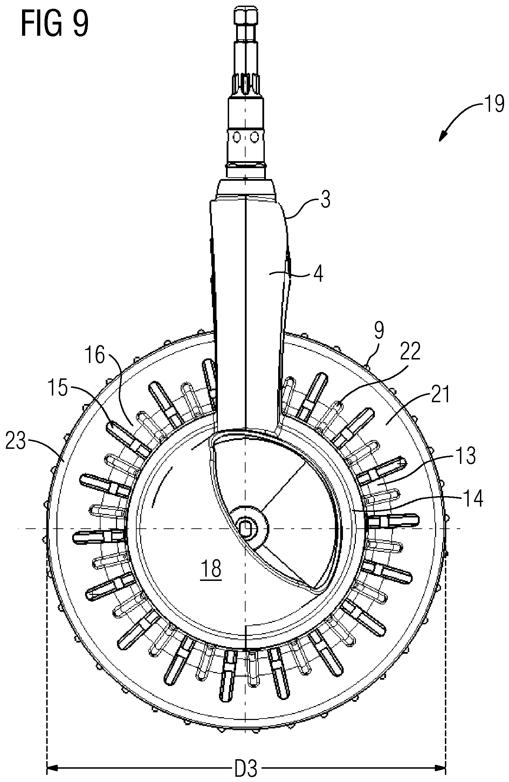

As can be seen for example from FIG. 9, but inferred also from FIG. 6 to FIG. 8, the annular flange-section has an outer diameter D3 that essentially corresponds to the maximal outer diameter D1 (see FIG. 5) of the grid basket 8.

In the implementation as shown in FIG. 6 to FIG. 9, the grid basket 8, more specifically the grid bars 9 at least in the central section between the axial ends of the grid basket 8, slightly project/s over the outer diameter D3 of the annular flange-section 21, *e.g*. up to 0.5 cm or up to 1.0 cm or even more depending for example on the size of the grid basket 8 and/or the size of the objects to be collected and/or on the type of ground the annular flange-section 21 shall be rolled on. The grid bar sections extending over the annular flange-section 21 in this case may improve the ground grip between the collection container assembly 1 and the ground it is moved over.

In other embodiments, the outer diameter D3 of the annular flange-section 21 may be slightly larger than the maximal outer diameter D1 of the grid basket 8, *e.g*. by 0.5 cm, 1.0 cm, or more.

As becomes obvious from the above description of advantageous embodiments, the annular flange-section 21 is effective in preventing application errors when operating the collector container assembly 1, lying in an undue deformation of the grid basket 8 or grid bars 9 when pressing the collector container assembly 1 against the ground for performing the rolling collection operation. The proposed grid protector 11 thus may prevent undue bending of the grid bars 9 in the outer axial sections of the grid basket 8 by the action of the protector shell 13, and may prevent undue bending of the grid bars 9 when urging the grid basket 8 collector container assembly 1 against the ground when collecting objects by the action of the annular wheel- or flange-section 21.

In all, it can be seen, that the underlying problem is solved by the collector grid protector, collector container assembly, and collector device.

### List of reference numerals

- 1: collector container assembly
- 2: collector container
- 3: mounting bracket
- 4: fork arms
- 5: first hub
- 6: second hub
- 7: coupling section
- 8: grid basket
- 9: grid bar
- 10: basket base
- 11: grid protector
- 12: overlapping region
- 13: protector shell
- 14: base frame / hub section
- 15: cut-out
- 16: spoke
- 17a: snap element
- 17b: protrusion
- 18: spout
- 19: further collector container assembly
- 20: retaining ring;
- 21: annular flange-section
- 22: reinforcement element
- 23: tread section
- A: central axis
- W: width
- R: radial direction
- D1: first diameter
- D2: second diameter
- D3: outer diameter of the annular flange section

## Claims

1. Object collector grid protector (11) configured for use with a collector grid basket (8) of an object collector device, the grid basket (8) comprising an object penetrable grid comprising a plurality of mutually spaced resilient grid bars (9) supported by and extending off a basket base (10), the collector grid protector (11) comprising at least one annular protector shell (13); **characterized in that**:
the annular protector shell (13) has a predefined lateral width (W) overlapping, when properly applied to the grid basket (8), with a predefined grid basket section located adjacent to the basket base (10), to thereby disable in the overlapping region (12) a passage of objects into the grid basket (8).

2. Object collector grid protector (11) according to claim 1, at least a section of the protector shell (13) having the shape of a shell-surface of a cylinder layer, a spheroid layer, ellipsoid or sphere layer.

3. Object collector grid protector (11) according to claim 1, the protector shell (13) comprising at an outer radial end a circumferential web, or comprising at an outer radial end a circumferential web having a plurality of protrusions (17b) and/or incisions oriented radially outwards relative to a central axis (A) of the protector shell (13) and mutually spaced from each other in circumferential direction, the plurality of protrusions (17b) and/or incisions optionally being located at a radial outer end of the web and/or aligned on the web along a circumferential line, the protector shell (13) optionally comprising a plurality of axial spokes (16) extending from a base frame (14) of the collector grid protector (11).

4. Object collector grid protector (11) according to at least one of claims 1 to 4, comprising a hub section (14) configured for being mechanically coupled to a counterpart hub section of the grid basket (8) and/or basket mounting bracket (3) of an object collector device and/or configured for mechanically connecting thereto and/or supporting the plurality of resilient grid bars (9) of the grid basket (8), wherein the hub section (14) may at least in part have the shape of a shell-surface of a cylinder layer.

5. Object collector container (2) comprising a collector grid basket (8) having an object penetrable grid with a plurality of mutually spaced resilient grid bars (9) supported by and extending off a basket base (10), and further comprising at least one collector grid protector (11) according to at least one of claims 1 to 4, the collector grid protector (11) being associated with the grid such that the protector shell (13) of the collector grid protector (11) overlaps the grid a predefined lateral width (W) in a predefined grid basket section (12) located adjacent to the basket base (10) to thereby disable in the overlapping region (12) a passage of objects into the grid basket (8).

6. Object collector container (2) according to claim 5, wherein the grid (8) has a spheroidal shape and the resilient grid bars (9) being oriented in axial direction, wherein, optionally, at each axial end of the collector container (2) one of the at least one collector grid protector (11) is provided.

7. Object collector container (2) according to one of claims 5 and 6, wherein a maximal radial diameter (D1) of the grid (8) is larger, preferably by a factor between 1/5 to 1/3, than a maximal radial diameter (D2) of a circumference defined at an outer rim of the protector shell (13).

8. Object collector container (2) according to at least one of claims 5 to 7, wherein the protector shell (13) at least in a section of the overlapping region (12) abuts against or fits closely to the resilient grid bars (9), wherein the protector shell (13) is located on an outer and/or inner side of the volume of the collector container (2).

9. Object collector container (2) according to at least one of claims 5 to 8, wherein the collector grid protector (11), at least a section thereof, is implemented and arranged to act as a wheel rolling on the ground in operational modes where objects are picked up by rolling the collector container (2) over the object.

10. Object collector container (2) according to claim 9, wherein the collector grid protector (11) comprises an annular flange-section (21), preferably extending from an axially inner section of the protector shell (13), the annular flange-section (21) protruding away from the collector grid basket (8) in outward direction and acting as the wheel, the annular flange-section (21) optionally being formed integral with the protector shell (13).

11. Object collector container (2) according to claim 10, wherein:
- the annular flange-section (21) comprises at its radial outer edge a tread section (23), optionally implemented as a bead or bulge (23), for rolling on the ground, wherein the tread section (23) optionally comprises a tread profile, and/or
- the outer diameter (D3) of the annular flange-section (21) essentially corresponds to the maximal outer diameter (D1) of the grid basket (8), or the outer diameter (D3) of the annular flange-section (21) is slightly smaller than the maximal outer diameter (D1) of the grid basket (8).

12. Object collector container (2) according to at least one of claims 5 to 11, wherein the collector grid protector (11) is exchangeably coupled to the basket base (10), or at least in part is formed integrally with the basket base (10) .

13. Object collector container (2) according to at least one of claims 5 to 12, wherein the collector grid protector (11) comprises a hub section (14) mechanically coupled to and/or integrally formed with the protector shell (13), the hub section (14) being mechanically coupled to a counterpart hub section of the basket base (10) and/or implemented as and/or providing a hub for rotatably mounting and coupling the collector container (2) to a hub mount (5, 6) of a mounting bracket (3).

14. Object collector container (2) according to at least one of claims 5 to 13, wherein first ends of the plurality of resilient grid bars (9) are associated with a first collector grid protector (11), and averted second ends of the plurality of grid bars (9) are associated with a second collector grid protector (11), wherein the first ends and second ends are attached or detachably attached to the first and second collector grid protector (11), or wherein the resilient grid bars (9) are formed integrally with the collector grid protector (11).

15. Object collector device (1, 19) comprising at least one collector container (2) according to at least one of claims 5 to 14, and/or comprising at least one object collector grid protector (11) according to at least one of claims 1 to 4.

## Patentansprüche

1. Objektsammelgitterschutz (11), der zur Verwendung mit einem Sammelgitterkorb (8) einer Objektsammelvorrichtung konfiguriert ist, wobei der Gitterkorb (8) ein objektdurchlässiges Gitter umfasst, das eine Vielzahl von voneinander beabstandeten elastischen Gitterstäben (9) umfasst, die von einer Korbbasis (10) gehalten werden und sich von dieser erstrecken,
wobei der Sammelgitterschutz (11) mindestens eine ringförmige Schutzhülle (13) umfasst;
**dadurch gekennzeichnet, dass**:
die ringförmige Schutzhülle (13) eine vordefinierte seitliche Breite (W) aufweist, die bei ordnungsgemäßer Anwendung auf den Gitterkorb (8) mit einem vordefinierten Gitterkorbabschnitt überlappt, der angrenzend an die Korbbasis (10) angeordnet ist,
um dadurch im überlappenden Bereich (12) einen Durchgang von Objekten in den Gitterkorb (8) zu verhindern.

2. Objektsammelgitterschutz (11) nach Anspruch 1, wobei mindestens ein Abschnitt der Schutzhülle (13) die Form einer Mantelfläche einer Zylinderschicht, einer Sphäroidschicht, eines Ellipsoids oder einer Kugelschicht aufweist.

3. Objektsammelgitterschutz (11) nach Anspruch 1, wobei die Schutzhülle (13) an einem äußeren radialen Ende einen umlaufenden Steg umfasst oder an einem äußeren radialen Ende einen umlaufenden Steg mit einer Vielzahl von Vorsprüngen (17b) und/oder radial nach außen gerichteten Einschnitten relativ zu einer Mittelachse (A) der Schutzhülle (13) umfasst und in Umfangsrichtung voneinander beabstandet sind, wobei die Vielzahl von Vorsprüngen (17b) und/oder Einschnitten optional an einem radialen äußeren Ende des Stegs angeordnet und/oder auf dem Steg entlang einer Umfangslinie ausgerichtet ist, wobei die Schutzhülle (13) optional eine Vielzahl von axialen Speichen (16) umfasst, die sich von einem Grundrahmen (14) des Sammelgitterschutzes (11) erstrecken.

4. Objektsammelgitterschutz (11) nach mindestens einem der Ansprüche 1 bis 4, umfassend einen Hubabschnitt (14), der zur mechanischen Kopplung mit einem gegenläufigen Hubabschnitt (10) des Gitterkorbes (8) und/oder einer Korbbefestigungshalterung (3) einer Objektsammelvorrichtung und/oder zur mechanischen Verbindung mit dieser und/oder zum Stützen der Vielzahl von elastischen Gitterstäben (9) des Gitterkorbs (8) konfiguriert ist, wobei der Hubabschnitt (14) zumindest teilweise die Form einer Mantelfläche einer Zylinderschicht aufweisen kann.

5. Objektsammelbehälter (2), umfassend einen Sammelgitterkorb (8) mit einem objektdurchlässigen Gitter mit einer Vielzahl von voneinander beabstandeten elastischen Gitterstäben (9), die von einer Korbbasis (10) gehalten werden und sich von dieser erstrecken, und ferner umfassend mindestens einen Sammelgitterschutz (11) nach mindestens einem der Ansprüche 1 bis 4, wobei der Sammelgitterschutz (11) mit dem Gitter derart verbunden ist, dass die Schutzhülle (13) des Sammelgitterschutzes (11) das Gitter mit einer vorbestimmten seitlichen Breite (W) in einem vorbestimmten Gitterkorbabschnitt (12) überlappt, der angrenzend an die Korbbasis (10) angeordnet ist, um dadurch im überlappenden Bereich (12) einen Durchgang von Objekten in den Gitterkorb (8) zu verhindern.

6. Objektsammelbehälter (2) nach Anspruch 5, wobei das Gitter (8) eine kugelförmige Form aufweist und die elastischen Gitterstäbe (9) in axialer Richtung ausgerichtet sind, wobei optional an jedem axialen Ende des Sammelbehälters (2) einer von mindestens einem Sammelgitterschutz (11) vorgesehen ist.

7. Objektsammelbehälter (2) nach einem der Ansprüche 5 und 6, wobei ein maximaler radialer Durchmesser (D1) des Gitters (8) größer ist, vorzugsweise um einen Faktor zwischen 1/5 und 1/3, als ein maximaler radialer Durchmesser (D2) eines an einem Außenrand der Schutzhülle (13) definierten Umfangs.

8. Objektsammelbehälter (2) nach mindestens einem der Ansprüche 5 bis 7, wobei die Schutzhülle (13) mindestens in einem Abschnitt des überlappenden Bereichs (12) an den elastischen Gitterstäben (9) anliegt oder eng an diese anschließt, wobei sich die Schutzhülle (13) auf einer Außen- und/oder Innenseite des Volumens des Sammelbehälters (2) befindet.

9. Objektsammelbehälter (2) nach mindestens einem der Ansprüche 5 bis 8, wobei der Sammelgitterschutz (11), zumindest ein Abschnitt davon, ausgeführt und angeordnet ist, um als ein am Boden rollendes Rad in Betriebsarten zu wirken, in denen Objekte durch Rollen des Sammelbehälters (2) über das Objekt aufgenommen werden.

10. Objektsammelbehälter (2) nach Anspruch 9, wobei der Sammelgitterschutz (11) einen ringförmigen Flanschabschnitt (21) umfasst, der sich vorzugsweise von einem axial inneren Abschnitt der Schutzhülle (13) erstreckt, wobei der ringförmige Flanschabschnitt (21) vom Sammelgitterkorb (8) nach außen herausragt und als Rad wirkt, wobei der ringförmige Flanschabschnitt (21) optional integral mit der Schutzhülle (13) ausgebildet ist.

11. Objektsammelbehälter (2) nach Anspruch 10, wobei:
- der ringförmige Flanschabschnitt (21) an seiner radialen Außenkante einen Laufflächenabschnitt (23), der optional als Wulst oder Ausbuchtung ausgeführt ist, zum Rollen auf dem Boden umfasst, wobei der Laufflächenabschnitt (23) optional ein Laufflächenprofil umfasst, und/oder
- der Außendurchmesser (D3) des ringförmigen Flanschabschnitts (21) im Wesentlichen dem maximalen Außendurchmesser (D1) des Gitterkorbes (8) entspricht, oder der Außendurchmesser (D3) des ringförmigen Flanschabschnitts (21) etwas kleiner ist als der maximale Außendurchmesser (D1) des Gitterkorbes (8).

12. Objektsammelbehälter (2) nach mindestens einem der Ansprüche 5 bis 11, wobei der Sammelgitterschutz (11) mit dem Korbboden (10) austauschbar gekoppelt ist oder zumindest teilweise integral mit dem Korbboden (10) ausgebildet ist.

13. Objektsammelbehälter (2) nach mindestens einem der Ansprüche 5 bis 12, wobei der Sammelgitterschutz (11) einen Hubabschnitt (14) umfasst, der mechanisch mit der Schutzhülle (13) gekoppelt und/oder integral mit dieser ausgebildet ist, wobei der Hubabschnitt (14) mechanisch mit einem gegenläufigen Hubabschnitt der Korbbasis (10) gekoppelt und/oder als Hub zur drehbaren Anbringung und Kopplung des Sammelbehälters (2) an eine Hubhalterung (5, 6) einer Korbbefestigungshalterung (3) ausgeführt und/oder bereitgestellt ist.

14. Objektsammelbehälter (2) nach mindestens einem der Ansprüche 5 bis 13, wobei erste Enden der Vielzahl von elastischen Gitterstäben (9) mit einem ersten Sammelgitterschutz (11) verbunden sind und abgewandte zweite Enden der Vielzahl von Gitterstäben (9) mit einem zweiten Sammelgitterschutz (11) verbunden sind, wobei die ersten Enden und zweiten Enden mit dem ersten und zweiten Sammelgitterschutz (11) verbunden oder lösbar verbunden sind, oder wobei die elastischen Gitterstäbe (9) integral mit dem Sammelgitterschutz (11) ausgebildet sind.

15. Objektsammelvorrichtung (1, 19) umfassend mindestens einen Sammelbehälter (2) nach mindestens einem der Ansprüche 5 bis 14 und/oder umfassend mindestens einen Objektsammelgitterschutz (11) nach mindestens einem der Ansprüche 1 bis 4.

## Revendications

1. Protecteur de grille de collecteur d'objets (11) configuré pour être utilisé avec un panier de grille de collecteur (8) d'un dispositif collecteur d'objets, le panier de grille (8) comprenant une grille pénétrable par un objet comprenant une pluralité de barres de grille élastiques (9) mutuellement espacées supportées par et s'étendant depuis une base de panier (10), le protecteur de grille de collecteur (11) comprenant au moins une coque annulaire protectrice (13);
**caractérisé en ce que** :
la coque annulaire protectrice (13) a une largeur latérale (W) prédéfinie se chevauchant, lorsqu'elle est correctement appliquée au panier de grille (8), avec une section de panier de grille prédéfinie située adjacente à la base de panier (10), pour ainsi empêcher dans la région de chevauchement (12) un passage d'objets dans le panier de grille (8).

2. Protecteur de grille de collecteur d'objets (11) selon la revendication 1, au moins une section de la coque protectrice (13) ayant la forme d'une surface de coque d'une couche cylindrique, d'une couche sphéroïdale, ellipsoïdale ou sphérique.

3. Protecteur de grille de collecteur d'objets (11) selon la revendication 1, la coque protectrice (13) comprenant à une extrémité radiale extérieure une bande périphérique, ou comprenant à une extrémité radiale extérieure une bande périphérique ayant une pluralité de saillies (17b) et/ou incisions orientées radialement vers l'extérieur par rapport à un axe central (A) de la coque protectrice (13) et mutuellement espacées dans la direction périphérique es unes des autres, la pluralité de saillies (17b) et/ou incisions étant éventuellement situées à une extrémité extérieure radiale de la bande et/ou alignées sur la bande le long d'une ligne circonférentielle, la coque protectrice (13) comprenant éventuellement une pluralité de rayons axiaux (16) s'étendant depuis un cadre de base (14) du protecteur de grille de collecteur (11).

4. Protecteur de grille de collecteur d'objets (11) selon au moins l'une des revendications 1 à 4, comprenant une section de moyeu (14) configurée pour être couplée mécaniquement à une section de moyeu homologue du panier de grille (8) et/ou support de montage de panier (3) d'un dispositif collecteur d'objets et/ou configuré pour y être connecté mécaniquement et/ou supporter la pluralité des barres de grille élastiques (9) du panier de grille (8), dans lequel la section de moyeu (14) peut avoir au moins partiellement la forme de la surface de coque d'une couche cylindrique.

5. Récipient collecteur d'objets (2) comprenant un panier de grille de collecteur (8) ayant une grille pénétrable par un objet avec une pluralité de barres de grille élastiques (9) mutuellement espacées supportées par et s'étendant depuis une base de panier (10), et comprenant en outre au moins un protecteur de grille de collecteur (11) selon au moins l'une des revendications 1 à 4, le protecteur de grille de collecteur (11) étant associé à la grille de telle sorte que la coque protectrice (13) du protecteur de grille de collecteur (11) recouvre la grille d'une largeur latérale prédéfinie (W) dans une section de panier de grille (12) prédéterminée située adjacente à base de panier (10) pour ainsi empêcher dans la région de chevauchement (12) un passage des objets dans le panier de grille (8).

6. Récipient collecteur d'objets (2) selon la revendication 5, dans lequel la grille (8) a une forme sphéroïdale et les barres de grille élastiques (9) sont orientées dans la direction axiale, dans lequel, éventuellement, à chaque extrémité axiale du récipient collecteur (2) un de au moins un protecteur de grille de collecteur (11) est prévu.

7. Récipient collecteur d'objets (2) selon l'une des revendications 5 et 6, dans lequel un diamètre radial maximal (D1) de la grille (8) est supérieur, de préférence d'un facteur compris entre 1/5 et 1/3, à un diamètre radial maximal (D2) d'une circonférence définie à un bord extérieur de la coque protectrice (13).

8. Récipient collecteur d'objets (2) selon au moins l'une des revendications 5 à 7, dans lequel la coque protectrice (13) au moins dans une section de la région de chevauchement (12) s'appuie contre ou s'adapte étroitement aux barres de grille élastiques (9), dans lequel la coque protectrice (13) est située sur un côté externe et/ou interne du volume du récipient collecteur (2).

9. Récipient collecteur d'objets (2) selon au moins l'une des revendications 5 à 8, dans lequel le protecteur de grille de collecteur (11), au moins une partie de celui-ci, est réalisé et agencé pour agir comme une roue roulant sur le sol dans des modes de fonctionnement où des objets sont ramassés en roulant le récipient collecteur (2) sur l'objet.

10. Récipient collecteur d'objets (2) selon la revendication 9, dans lequel le protecteur de grille de collecteur (11) comprend une section de bride annulaire (21), s'étendant de préférence à partir d'une section axialement intérieure de la coque protectrice (13), la section de bride annulaire (21) faisant saillie à l'extérieur du panier de grille de collecteur (8) et agissant comme roue, la section de bride annulaire (21) étant formée au choix en une pièce avec la coque protectrice (13).

11. Récipient collecteur d'objets (2) selon la revendication 10, dans lequel:
- la section de bride annulaire (21) comprend sur son bord extérieur radial une section de bande de roulement (23), éventuellement réalisée sous la forme d'un talon ou d'un renflement (23), pour rouler au sol, dans lequel le section de bande de roulement (23) comprend éventuellement un profil de bande de roulement, et/ou
- le diamètre extérieur (D3) de la section de bride annulaire (21) correspond essentiellement au diamètre extérieur maximal (D1) du panier de grille (8), ou le diamètre extérieur (D3) de la section de bride annulaire (21) est légèrement inférieur au diamètre extérieur maximal (D1) du panier de grille (8).

12. Récipient collecteur d'objets (2) selon au moins l'une des revendications 5 à 11, dans lequel le protecteur de grille de collecteur (11) est couplé de manière interchangeable à la base de panier (10), ou au moins en partie est formé d'une seule pièce avec la base de panier (10).

13. Récipient collecteur d'objets (2) selon au moins l'une des revendications 5 à 12, dans lequel le protecteur de grille de collecteur comprend une section de moyeu (14) couplée mécaniquement et/ou formée d'une seule pièce avec la coque protectrice (13), la section de moyeu (14) étant couplée mécaniquement à une section de moyeu (10) de contrepartie du base de panier (10) et/ou réalisée comme et/ou fournissant un moyeu pour monter le récipient collecteur (2) à un moyeu (5, 6) d'un support (3).

14. Récipient collecteur d'objets (2) selon au moins l'une des revendications 5 à 13, dans lequel premières extrémités de la pluralité de barres de grille élastiques (9) sont associés avec un premier protecteur de grille de collecteur (11), et secondes extrémités de la pluralité des barres de grille (9) sont associés avec un second protecteur de grille de collecteur (11), dans lequel le premières extrémités et secondes extrémités sont fixées ou fixées de manière amovible au premier et second protecteur de grille de collecteur (11), ou dans lequel les barres de grille élastiques (9) sont formées intégralement avec le protecteur de grille de collecteur (11).

15. Dispositif collecteur d'objets (1, 19) comprenant au moins un récipient collecteur (2) selon au moins l'une des revendications 5 à14, et/ou comprenant au moins un protecteur de grille de collecteur d'objets (11) selon au moins l'une des revendications 1 à 4.
